# EUROPÄISCHE PATENTSCHRIFT

(11) **EP 1 700 748 B1**
(45) Veröffentlichungstag und Bekanntmachung des Hinweises auf die Patenterteilung: **27.08.2008**
(21) Anmeldenummer: 05024489.6
(22) Anmeldetag: 10.11.2005
(51) Int. Cl.: B60R 13/02

(54) **Innenaustattungseinrichtung für ein Fahrzeug**
Equipment for the interior of a vehicle
Equipement pour l'intérieur d'un véhicule

(30) Priorität: 15.02.2005 DE 102005006746
(43) Veröffentlichungstag der Anmeldung: 13.09.2006
(73) Patentinhaber: Dr. Ing. h.c. F. Porsche Aktiengesellschaft, 70435 Stuttgart (DE)
(72) Erfinder: Eckart, Gerald, 88299 Leutkirch (DE)

(56) Entgegenhaltungen:
- DE-A1- 3 525 816
- DE-A1- 3 606 812
- DE-A1- 19 745 875
- JP-A- 2 171 356
- US-A- 4 991 457

## Beschreibung

Bei der Erfindung wird ausgegangen von einer Innenausstattungseinrichtung für ein Fahrzeug, gemäß Oberbegriff des Anspruchs 1.

Eine gattungsbildende Innenausstattungseinrichtung ist der DE 35 25 816 A1 zu entnehmen. Diese bekannte Innenausstattungseinrichtung umfasst ein Verkleidungsteil, hier eine Schwellerverkleidung, an der gegen die Kraft einer Federeinrichtung eine verschiebliche Spaltabdeckung geführt ist. Die hierfür vorgesehene Verschiebeführung wird durch einen Aufnahmekanal gebildet, in den die Spaltabdeckung unter Zwischenschaltung der Federeinrichtung eingebracht wird. Die Spaltabdeckung ist somit in Einschubrichtung, also in einer einzigen Verschieberichtung, gegen die Kraft der Federeinrichtung bewegbar am Verkleidungsteil gehalten. Mit ihrem Rand kann die Spaltabdeckung in Anlage mit einem Anschlussteil gebracht werden, hier einer weiteren Verkleidung. Die bekannte Spaltabdeckung weist an ihrem Rand eine gerade Kontur auf, so dass sie an einer ebenfalls geraden Wand des Anschlussteils einer Sitzschienenabdeckung herangeführt werden kann.

Aufgabe der Erfindung ist es, eine Innenausstattungseinrichtung für ein Fahrzeug anzugeben, die eine verbesserte Spaltabdeckung aufweist.

Gelöst wird diese Aufgabe mit einer Innenausstattungseinrichtung, die die in Anspruch 1 genannten Merkmale zeigt. Weitere, die Erfindung ausgestaltende Merkmale sind in den Unteransprüchen angegeben.

Die mit der Erfindung hauptsächlich erzielten Vorteile sind darin zu sehen, dass eine optisch ansprechende Abdeckung eines Spalts zwischen einem Verkleidungsteil und einem Anschlussteil ermöglicht wird, welches Anschlussteil keine ebene Fläche aufweist. Derartige Anschlussteile werden beispielsweise durch Rohbausäulen oder andere Fahrzeugteile bzw. deren Verkleidungsteile gebildet. Durch die verschiebliche Führung der Spaltabdeckung am Verkleidungsteil in zwei Richtungen kann sich so die Spaltabdeckung selbst gegenüber dem Anschlussteil ausrichten bzw. zentrieren, so das eine optimale Abdeckung des Spaltes gegeben ist. Durch die Verschiebemöglichkeit in zwei Richtungen können so auch ohne weiteres größere Toleranzen ausgeglichen werden, die einerseits aus unterschiedlichen Spaltweiten und andererseits aus einer nicht optimalen Ausrichtung von Verkleidungsteil und Anschlussteil resultieren.

Nach einer Weiterbildung mit den in Anspruch 2 genannten Merkmalen ist vorteilhaft, dass die Spaltabdeckung sich mit ihrer elastischen Lippe genau an die Kontur des Anschlussteils anlegen kann. Außerdem können durch die elastische Lippe zusätzlich Toleranzen aufgenommen werden.

In Anspruch 3 ist eine kostengünstige und zweckmäßige Spaltabdeckung angegeben, die mit der elastischen Lippe ausgestattet ist.

Eine Ausgestaltung der Verschiebeführung, die das Verschieben der Spaltabdeckung gegenüber dem Verkleidungsteil in den zwei Verschieberichtungen vorteilhaft erlaubt, ist in Anspruch 6 angegeben.

Nach einer Weiterbildung mit den in Anspruch 7 genannten Merkmalen kann die den U-förmigen Rahmen umfassende Verschiebeführung außerdem die Spaltabdeckung an dem Verkleidungsteil halten.

In Anspruch 9 ist eine Ausführungsform angegeben, nach der auch eine sich über eine größere Länge erstreckende Spaltabdeckung sicher am Verkleidungsteil geführt werden kann.

Eine besonders bevorzugte Federeinrichtung, die die Spaltabdeckung beaufschlagt, ist in Anspruch 11 angegeben.

Die Erfindung wird nachfolgend anhand eines Ausführungsbeispiels mit Bezug auf die Zeichnung näher erläutert. Es zeigen:
- Fig. 1: eine Innenausstattungseinrichtung für ein Fahrzeug und
- Fig. 2: einen Schnitt durch die Innenausstattungseinrichtung entlang der Linie ||-|| in Fig. 1.

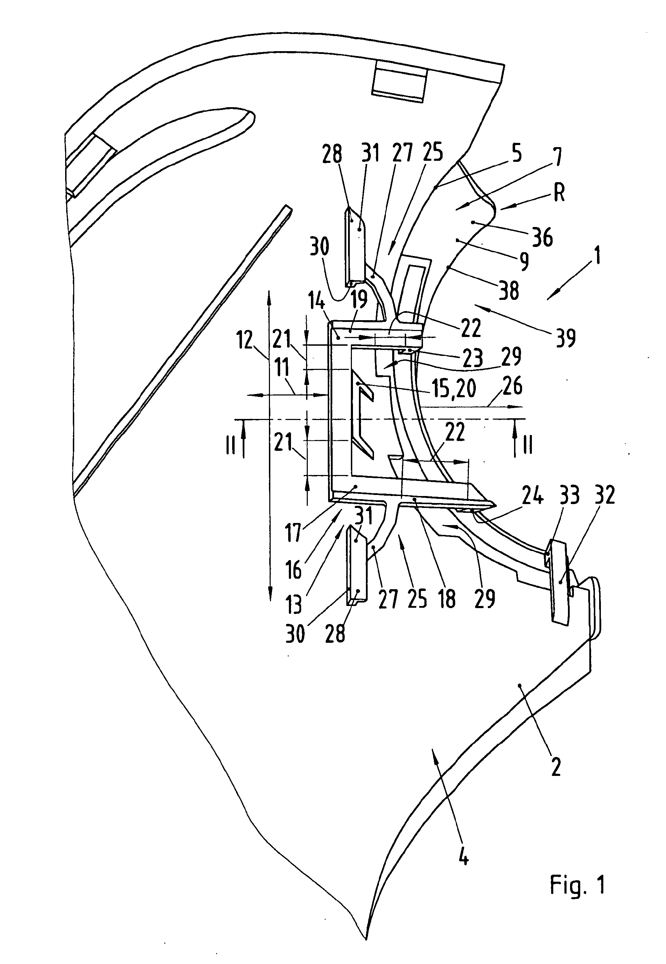

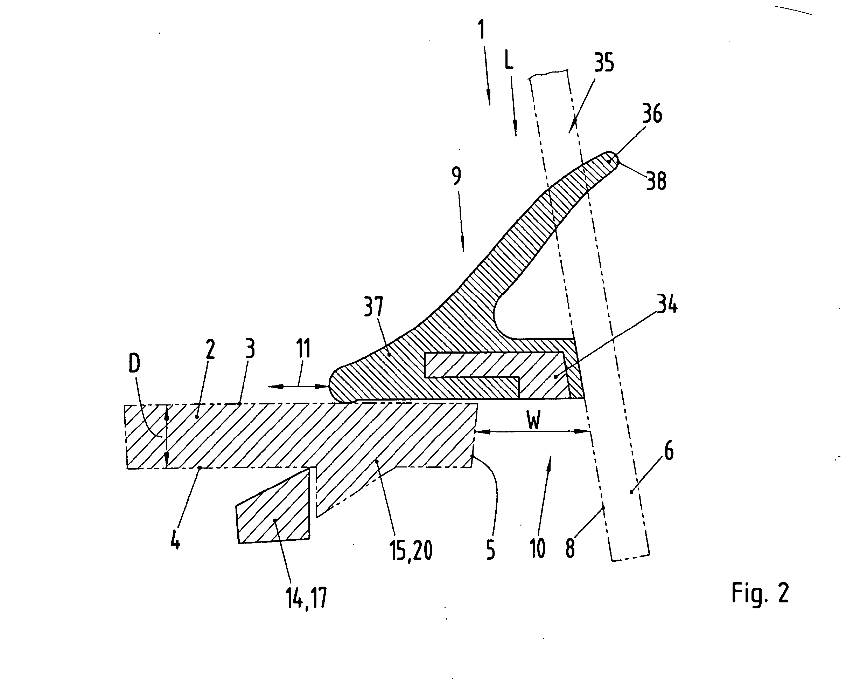

Anhand der Fig. 1 und 2 wird im folgenden eine Innenausstattungseinrichtung 1 beschrieben, die ein flächiges Verkleidungsteil 2 aufweist, welches beispielsweise zur Abdeckung eines hier nicht dargestellten Rohbauabschnitts, beispielsweise einer Seitenwand, innerhalb eines Innenraums eines Kraftfahrzeugs vorgesehen ist. Das Verkleidungsteil 2 umfasst eine von dem nicht dargestellten Fahrzeuginnenraum aus sichtbare Sichtfläche 3 und eine Unterseite 4, die dem Rohbauabschnitt des Fahrzeugs zugewandt ist. Fig. 1 zeigt demgemäß eine perspektivische Ansicht auf die Unterseite 4 des Verkleidungsteils 2. Ferner weist das Verkleidungsteil 2 einen Abschlussrand 5 auf, der einem benachbarten Anschlussteil 6 zugewandt liegt, welches Anschlussteil beispielsweise ein benachbartes, weiteres Verkleidungsteil, vorzugsweise eine Umlenkung eines Sicherheitsgurtes verkleidende Rosette, der Innenausstattungseinrichtung 1 oder ein weiterer Rohbauabschnitt, insbesondere Säule, sein kann. Der Abschlussrand 5 ist - wie Fig. 1 zeigt - abweichend von einer Geraden ausgeführt und liegt beispielsweise als Abschnitt eines Kreisbogens 7 vor, der so einer dazu passenden, räumlichen Außenfläche 8 des Anschlussteils 6 entsprechend folgt.

Die Innenausstattungseinrichtung 1 besitzt ferner eine Spaltabdeckung 9, die einen Spalt 10 zwischen dem Abschlussrand 5 und der Außenfläche 8 des Anschlussteils 6 an der Sichtfläche 3 abdeckt. Um unterschiedliche Weiten W des Spaltes 10, ggf. in seinem Verlauf, abdecken zu können, ist die Spaltverkleidung 9 an dem Verkleidungsteil 2 in einer ersten Verschieberichtung 11 und einer zweiten, quer dazu verlaufenden Verschieberichtung 12 geführt, was durch entsprechende Doppelpfeile in den Fig. 1 und 2 dargestellt ist. Die zweite Verschieberichtung 12 verläuft entlang des Spaltes 10 und die erste Verschieberichtung 11 ist vorzugsweise rechtwinkelig dazu orientiert, d.h., dass die Spaltabdeckung 9 in der ersten Verschieberichtung 11 in Richtung des Anschlussteils 6 oder umgekehrt verschoben werden kann. Durch Überlagerung der beiden Verschieberichtungen 11 und 12 kann die Spaltabdeckung um eine gedachte Schwenkachse gedreht werden.

Um die Spaltabdeckung 9 an dem Verkleidungsteil 2 in der ersten und zweiten Verschieberichtung 11 und 12 verschieblich zu halten, ist eine Verschiebeführung 13 vorgesehen, die zumindest zwei Führungsteile 14 und 15 aufweist, von denen eines an der Unterseite 4 des Verkleidungsteils 2 und das andere an der Spaltabdeckung 9 angeordnet ist und die Unterseite 4 untergreift. Jedenfalls ist die Verschiebeführung 13 der Unterseite 4 des Verkleidungsteils 2 zugeordnet. Das erste Führungsteil 14 ist als U-förmiger Rahmen 16 ausgeführt, der mithin eine Rahmenbasis 17 und zwei mit Abstand zueinander liegende, parallele Rahmenabschnitte 18 und 19 aufweist. Die Rahmenbasis 17 verläuft parallel zur zweiten Verschieberichtung 12 und die beiden Rahmenabschnitte 18 und 19 sind parallel zur ersten Verschieberichtung 11 orientiert. Innerhalb des Rahmens 16 liegt das zweite Führungsteil 15, welches als erhabener, ggf. federnd ausgeführter, Führungssteg 20 realisiert ist, dessen Länge kürzer als die Länge der Rahmenbasis 17 ist, so dass sich in der zweiten Verschieberichtung 12 ein Verschiebeweg 21 ergibt, der aus der Längendifferenz von Rahmenbasis 17 und Führungssteg 20 resultiert. Der in der ersten Verschieberichtung 11 zur Verfügung stehende zweite Verschiebeweg 22 ergibt sich aus der jeweiligen zur Verfügung stehenden Länge der Rahmenabschnitte 18 bzw. 19.

Für die folgende Beschreibung wird davon ausgegangen, dass das erste Führungsteil 14 von der Spaltabdeckung 9 ausgeht und das zweite Führungsteil 15 an der Unterseite 4 des Verkleidungsteils 2 entspringt. Der U-förmige Rahmen 16 ist demgemäß Bestandteil der Spaltabdeckung 9 und mit dieser über Verbindungsstege 23 und 24 verbunden, die eine Länge aufweisen, die zumindest der Dicke (Fig. 2) des Verkleidungsteils 2 entspricht, so dass die Spaltabdeckung 9 den Abschlussrand 5 des Verkleidungsteils 2 an der Sichtfläche 3 und an der Unterseite 4 umgreift. Die zur Verfügung stehende Länge der Rahmenabschnitte 18 und 19 für den Verschiebeweg 22 ergibt sich somit aus dem Abstand der Verbindungsstege 23 und 24 zum Abschlussrand 5, wenn die Spaltabdeckung in der in Fig. 1 gezeigten Ruhelage R vorliegt. Die Verschiebeführung 13 besitzt ferner noch eine Federeinrichtung 25, die die Spaltabdeckung 9 mit einer Federkraft 26 beaufschlagt, die die Spaltabdeckung 9 in Richtung zum Anschlussteil 6 drängt. In den Fig. 1 und 2 ist die Spaltabdeckung 9 in der Ruhelage R gezeigt, in der die Federeinrichtung 25 die Verschiebeführung 13, insbesondere das erste Führungsteil 14, so beaufschlagt, dass die Rahmenbasis 17 an dem zweiten Führungsteil 15, nämlich dem Führungssteg 20 anliegt. Die Federeinrichtung 25 umfasst zwei Federarme 27, die sich seitlich von den Rahmenabschnitten 18 und 19 wegerstrecken und jeweils mit ihrem nicht sichtbaren Ende an einem zugeordneten Widerlager 28 abgestützt sind, welche Widerlager 28 an der Unterseite 4 angeordnet sind. Die Federarme 27 verlaufen gebogen, und zwar weggerichtet von dem Abschlussrand 5, wobei die Federarme 27 bzw. deren Bogen so bemessen ist, dass sie über den Verschiebeweg 22 die entsprechende Federkraft 26 bereitstellen können. Für eine Vergrößerung des Verschiebewegs 22 kann der Abschlussrand 5 im Bereich der Verbindungsstege 23 und 24 jeweils mit entsprechenden Ausnehmungen 29 versehen sein, die überdies eine Erstreckung entlang des Abschlussrandes 5 aufweisen, so dass der Verschiebeweg 21 bereitgestellt werden kann, wenn die Verbindungsstege 23 und 24 innerhalb der Ausnehmung 29 liegen. An den Verschiebeweg 21 angepasst sind auch die Widerlager 28 mit einer Längserstreckung so ausgeführt, dass in jeder Verschiebestellung des Rahmens 16 die Federarme 27 ihr Widerlager 28 finden. Im Querschnitt gesehen sind die Widerlager 28 als L-förmige Stege ausgeführt, wobei die Höhe des Schenkels 30 des Stegs so bemessen ist, dass der Federarm 27 die Basis 31 des Steges untergreifen kann.

Die Verschiebeführung 13 kann insbesondere für ein zusätzliches sicheres Halten der Spaltabdeckung 9 an dem Verkleidungsteil 2 noch zumindest einen Führungsarm 32 aufweisen, der über einen Verbindungssteg 33 an der Spaltabdeckung 9 befestigt ist und der etwa parallel zur Unterseite 2 verlaufend ausgebildet ist. Vorzugsweise liegt dieser Führungsarm 32 mit Abstand zu dem ersten Führungsteil 14.

Im folgenden wird die zweiteilige Spaltabdeckung 9 näher beschrieben: Sie ist als Zwei-Komponenten-Kunststoffteil ausgeführt und umfasst einen Träger 34, von dem das erste Führungsteil 14, also der U-förmige Rahmen 16 ausgeht. Rahmen 16 und Träger 34 sind vorzugsweise einstückig aus demselben Material hergestellt. Der Träger 34 mit seiner ersten Kunststoff-Komponenten ist von einer zweiten Kunststoff-Komponente umgeben, die gegenüber der ersten Komponente weicher ausgeführt ist. Die zweite Komponente, vorzugsweise ein Elastomer, bildet ein Profilteil 35 mit einer freistehenden, elastischen Lippe 36, die von einem Grundkörper 37 ausgeht, der den Träger 34 umgibt. Das freie Ende der elastischen Lippe 36 bildet einen Rand 38 der Spaltabdeckung 9, welcher Rand eine Kontur 39 aufweist, die - wie der Abschlussrand 5 - von einer Geraden abweicht und beispielsweise als Abschnitt eines Kreisbogens ausgeführt sein kann, was aus Fig. 1 hervorgeht. Die Kontur 39 ist mithin an den räumlichen Verlauf der Außenfläche 8 des Anschlussteils 6 angepasst und umgreift dieses demnach zumindest teilweise. In Fig. 2 ist die Lippe 36 in ihrer entspannten Lage L gezeigt. In einer nicht dargestellten Wirkstellung liegt sie jedoch auf der Außenfläche 8 des Anschlussteils 6, insbesondere mit ihrem Rand 38 auf. Dadurch, dass die Kontur 39 von einer Geraden abweicht, wird die Spaltabdeckung 9 bei Anlage mit ihrem Rand 38 an der Außenfläche 8 selbst entlang der ersten und zweiten Verschieberichtung 11 und 12 so verschoben, dass sich die Spaltabdeckung 9 gegenüber dem Anschlussteil 6 selbst ausrichtet und den Spalt 10 überdeckt. Durch die elastische Nachgiebigkeit der Lippe 36 kann sie außerdem noch verformt werden, so dass weitere Toleranzen aufgenommen werden können. Somit können größere Toleranzen des Spaltes 10 einerseits durch das Verschieben der Spaltabdeckung 9 in Verschieberichtung 11 und 12 und andererseits durch die elastische Verformbarkeit der Lippe 36 ausgeglichen werden. Durch die Verwendung eines Elastomers für die Lippe 36 werden außerdem bei einer Relativbewegung, beispielsweise im Betrieb des Kraftfahrzeugs, Geräuschentwicklungen durch eine Bewegung der Lippe 36 auf der Außenfläche 8 und ein übermäßiger Verschleiß der Lippe 36 vermieden bzw. zumindest vermindert.

## Patentansprüche

1. Innenausstattungseinrichtung für ein Fahrzeug, mit einem Verkleidungsteil, einer Spaltabdeckung und mit einem Anschlussteil, welche Spaltabdeckung an dem Verkleidungsteil durch eine Verschiebeführung in einer ersten Verschieberichtung gegen die Kraft einer Federeinrichtung bewegbar gehalten und mit ihrem Rand in Anlage mit dem Anschlussteil gebracht ist, **dadurch gekennzeichnet, dass** die Spaltabdeckung (9) durch die Verschiebeführung (13) in einer quer zur ersten Verschieberichtung (11) verlaufenden zweite Verschieberichtung (12) an dem Verkleidungsteil (2) bewegbar gehalten ist und dass der Rand (38) der Spaltabdeckung (9) eine von einer Geraden abweichende Kontur (39) aufweist, so dass die Spaltabdeckung (9) das Anschlussteil (6) zumindest teilweise umgreift.

2. Innenausstattungseinrichtung nach Anspruch 1, **dadurch gekennzeichnet, dass** die Spaltabdeckung (9) zumindest zweiteilig ausgeführt ist und einen Träger (34) besitzt, an dem eine elastische Lippe (36) angeordnet ist, die den Rand (38) mit der Kontur (39) aufweist.

3. Innenausstattungseinrichtung nach Anspruch 2, **dadurch gekennzeichnet, dass** die Spaltabdeckung (9) als Zwei-Komponenten-Kunststoffteil ausgeführt ist und dass der Träger (34) aus einer gegenüber der Lippe (36) härteren ersten Kunststoff-Komponente besteht.

4. Innenausstattungseinrichtung nach Anspruch 3, **dadurch gekennzeichnet, dass** die zweite Kunststoff-Komponente für die Lippe (36) ein Elastomer ist.

5. Innenausstattungseinrichtung nach Anspruch 1, **dadurch gekennzeichnet, dass** die Verschiebeführung (13) an einer nicht sichtbaren Unterseite (4) des Verkleidungsteils (2) angeordnet ist.

6. lnnenausstattungseinrichtung nach einem der vorhergehenden Ansprüche, **dadurch gekennzeichnet, dass** die Verschiebeführung (13) einen U-förmigen Rahmen (16) umfasst, in den ein Führungssteg (20) eingreift.

7. Innenausstattungseinrichtung nach Anspruch 6, **dadurch gekennzeichnet, dass** sich der Rahmen (16) etwa parallel zu der Unterseite (4) des Verkleidungsteils (2) erstreckt.

8. Innenausstattungseinrichtung nach einem der Ansprüche 6 oder 7, **dadurch gekennzeichnet, dass** der Rahmen (16) an der Spaltabdeckung (9) und der Führungssteg (20) an der Unterseite (4) des Verkleidungsteils (2) angeordnet ist.

9. lnnenausstattungseinrichtung nach einem der vorhergehenden Ansprüche, **dadurch gekennzeichnet, dass** die Verschiebeführung (13) zusätzlich zumindest einen Führungsarm (32) an der Spaltabdeckung (9) aufweist, der sich parallel zur Unterseite (4) des Verkleidungsteils (2) erstreckt.

10. lnnenausstattungseinrichtung nach einem der vorhergehenden Ansprüche, **dadurch gekennzeichnet, dass** die Federeinrichtung (25) der Verschiebeführung (13) zugeordnet ist.

11. lnnenausstattungseinrichtung nach einem der Ansprüche 6, 7 oder 8, **dadurch gekennzeichnet, dass** von dem U-förmigen Rahmen (16) zumindest ein Federarm (27) ausgeht, der sich an einem Widerlager (28) an der Unterseite (4) des Verkleidungsteils (2) abstützt.

12. Innenausstattungseinrichtung nach Anspruch 11, **dadurch gekennzeichnet, dass** das Widerlager (28) als - im Querschnitt gesehen - L-förmiger Steg ausgeführt ist, der von dem Federarm (27) untergriffen wird.

13. Innenausstattungseinrichtung nach einem der Ansprüche 11 oder 12. **dadurch gekennzeichnet, dass** der Federarm (27) einstückig mit dem Rahmen (16) ausgeführt ist.

14. Innenausstattungseinrichtung nach einem der vorhergehenden Ansprüche, **dadurch gekennzeichnet, dass** die Spaltabdeckung (9) einen Abschlussrand (5) des Verkleidungsteils (2) umgreift.

15. lnnenausstattungseinrichtung nach einem der vorhergehenden Ansprüche, **dadurch gekennzeichnet, dass** die Kontur (39) des Randes (38) der Spaltabdeckung (9) als Kreisbogen oder Kreisbogenabschnitt ausgeführt ist.

## Claims

1. Equipment for the interior of a vehicle, with a trim panel, a gap covering and with a joining part, which gap covering is held on the trim panel by means of a displacement guide in a manner such that it can move in a first displacement direction counter to the force of a spring device and is brought by its edge into contact with the joining part, **characterized in that** the gap covering (9) is held on the trim panel (2) by means of the displacement guide (13) in a manner such that it can move in a second displacement direction (12) running transversely with respect to the first displacement direction (11), and **in that** the edge (38) of the gap covering (9) has a contour (39) which differs from a straight line such that the gap covering (9) at least partially engages around the joining part (6).

2. Interior equipment according to Claim 1, **characterized in that** the gap covering (9) is of at least two-part design and has a support (34) on which an elastic lip (36) which has the edge (38) with the contour (39) is arranged.

3. Interior equipment according to Claim 2, **characterized in that** the gap covering (9) is designed as a two-component plastic part, and **in that** the support (34) is composed of a first plastic component which is harder than the lip (36).

4. Interior equipment according to Claim 3, **characterized in that** the second plastic component for the lip (36) is an elastomer.

5. Interior equipment according to Claim 1, **characterized in that** the displacement guide (13) is arranged on a non-visible lower side (4) of the trim panel (2).

6. Interior equipment according to one of the preceding claims, **characterized in that** the displacement guide (13) comprises a U-shaped frame (16) in which a guide web (20) engages.

7. Interior equipment according to Claim 6, **characterized in that** the frame (16) extends approximately parallel to the lower side (4) of the trim panel (2).

8. Interior equipment according to either of Claims 6 and 7, **characterized in that** the frame (16) is arranged on the gap covering (9) and the guide web (20) is arranged on the lower side (4) of the trim panel (2).

9. Interior equipment according to one of the preceding claims, **characterized in that** the displacement guide (13) additionally has at least one guide arm (32) on the gap covering (9), said guide arm extending parallel to the lower side (4) of the trim panel (2).

10. Interior equipment according to one of the preceding claims, **characterized in that** the spring device (25) is assigned to the displacement guide (13).

11. Interior equipment according to one of Claims 6, 7 or 8, **characterized in that** at least one spring arm (27) which is supported on an abutment (28) on the lower side (4) of the trim panel (2) emerges from the U-shaped frame (16).

12. Interior equipment according to Claim 11, **characterized in that** the abutment (28) is designed as a web which - as seen in cross section - is L-shaped and is engaged under by the spring arm (27).

13. Interior equipment according to either of Claims 11 and 12, **characterized in that** the spring arm (27) is formed integrally with the frame (16).

14. Interior equipment according to one of the preceding claims, **characterized in that** the gap covering (9) engages around an end edge (5) of the trim panel (2).

15. Interior equipment according to one of the preceding claims, **characterized in that** the contour (39) of the edge (38) of the gap covering (9) is designed as a circular arc or as a section of a circular arc.

## Revendications

1. Dispositif d'équipement intérieur d'un véhicule, qui présente une pièce d'habillage, un recouvrement d'interstice et une pièce de raccord, le recouvrement d'interstice étant maintenu sur la pièce d'habillage en pouvant être déplacé par l'intermédiaire d'un guide de coulissement dans une première direction de coulissement opposée à la force d'un dispositif élastique et étant amené à se placer sur la pièce de raccordement par son bord,
**caractérisé en ce que**
le recouvrement d'interstice (9) est maintenu sur la pièce d'habillage (2) par l'intermédiaire du guide de coulissement (13) de manière à pouvoir se déplacer dans une deuxième direction de coulissement (12) qui s'étend transversalement par rapport à la première direction de coulissement (11) et **en ce que** le bord (38) du recouvrement d'interstice (9) présente un contour (39) non rectiligne, de telle sorte que le recouvrement d'interstice (9) chevauche au moins une partie de la pièce de raccordement (6).

2. Dispositif d'équipement intérieur selon la revendication 1, **caractérisé en ce que** le recouvrement d'interstice (9) est réalisé en au moins deux pièces et possède un support (34) sur lequel est disposée une lèvre élastique (36) qui présente le bord (38) doté du contour (39).

3. Dispositif d'équipement intérieur selon la revendication 2, **caractérisé en ce que** le recouvrement d'interstice (9) est réalisé sous la forme d'une pièce en matière synthétique à deux composants et **en ce que** le support (34) est constitué d'un premier composant synthétique plus dur que la lèvre (36).

4. Dispositif d'équipement intérieur selon la revendication 3, **caractérisé en ce que** le deuxième composant synthétique prévu pour la lèvre (36) est un élastomère.

5. Dispositif d'équipement intérieur selon la revendication 1, **caractérisé en ce que** le guide de coulissement (13) est disposé sur un côté inférieur (4) non visible de la pièce d'habillage (2).

6. Dispositif d'équipement intérieur selon l'une des revendications précédentes, **caractérisé en ce que** le guide de coulissement (13) comprend un cadre (16) en forme de U dans lequel s'engage une nervure de guidage (20).

7. Dispositif d'équipement intérieur selon la revendication 6, **caractérisé en ce que** le cadre (16) s'étend sensiblement en parallèle au côté inférieur (4) de la pièce d'habillage (2).

8. Dispositif d'équipement intérieur selon l'une des revendications 6 ou 7, **caractérisé en ce que** le cadre (16) est disposé sur le recouvrement d'interstice (9) et **en ce que** la nervure de guidage (20) est disposée sur le côté inférieur (4) de la pièce d'habillage (2).

9. Dispositif d'équipement intérieur selon l'une des revendications précédentes, **caractérisé en ce que** le guide de coulissement (13) présente de plus sur le recouvrement d'interstice (9) au moins un bras de guidage (32) qui s'étend parallèlement au côté inférieur (4) de la pièce d'habillage (2).

10. Dispositif d'équipement intérieur selon l'une des revendications précédentes, **caractérisé en ce que** le dispositif élastique (25) est associé au guide de coulissement (13).

11. Dispositif d'équipement intérieur selon l'une des revendications 6, 7 ou 8, **caractérisé en ce qu'**au moins un bras élastique (27) qui s'appuie sur un contre-appui (28) ménagé sur le côté inférieur (4) de la pièce d'habillage (2) déborde du cadre (16) en forme de U.

12. Dispositif d'équipement intérieur selon la revendication 11, **caractérisé en ce que** vu en coupe transversale, le contre-appui (28) a la forme d'une nervure en forme de L qui est chevauchée par-dessous par le bras élastique (27).

13. Dispositif d'équipement intérieur selon l'une des revendications 11 ou 12, **caractérisé en ce que** le bras élastique (27) est réalisé d'un seul tenant avec le cadre (16).

14. Dispositif d'équipement intérieur selon l'une des revendications précédentes, **caractérisé en ce que** le recouvrement d'interstice (9) chevauche un bord de fermeture (5) de la pièce d'habillage (2).

15. Dispositif d'équipement intérieur selon l'une des revendications précédentes, **caractérisé en ce que** le contour (39) du bord (38) du recouvrement d'interstice (9) est réalisé en arc de cercle ou en segment d'arc de cercle.
